(19) Europäisches Patentamt / European Patent Office / Office européen des brevets

(11) **EP 2 353 287 B1**

(12) **EUROPEAN PATENT SPECIFICATION**

(45) Date of publication and mention
of the grant of the patent:
**13.03.2013 Bulletin 2013/11**

(21) Application number: **08875257.1**

(22) Date of filing: **31.10.2008**

(51) Int Cl.:
***H04N 5/232*** *(2006.01)*

(86) International application number:
**PCT/EP2008/064816**

(87) International publication number:
**WO 2010/049005 (06.05.2010 Gazette 2010/18)**

(54) **A METHOD AND DIGITAL IMAGING APPLIANCE FOR SELECTING A FOCUS SETTING WITH A NORMALIZED FIGURE-OF-MERIT**

METHODE UND DIGITALES BILDERZEUGUNGSGERÄT FÜR DIE AUSWAHL EINER FOCUS EINSTELLUNG MIT EINEM NORMALISIERTEN BEWERTUNGSKRITERIUM

PROCÉDÉ ET APPAREIL D'IMAGERIE NUMÉRIQUE POUR SÉLECTIONNER UN RÉGLAGE DE MISE AU POINT À L'AIDE D'UN FACTEUR DE MÉRITE NORMALISÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**10.08.2011 Bulletin 2011/32**

(73) Proprietor: **Hewlett-Packard Development Company, L.P.
Houston, TX 77070 (US)**

(72) Inventor: **POLLARD, Stephen
Bristol Buckinghamshire BS34 8QZ (GB)**

(74) Representative: **Rees, Simon John Lewis
Haseltine Lake LLP
Redcliff Quay
120 Redcliff Street
Bristol, Avon BS1 6HU (GB)**

(56) References cited:
EP-A- 1 712 951        US-A- 6 067 115
US-A1- 2001 038 418    US-A1- 2008 181 595
US-B1- 6 512 549

**Description**

BACKGROUND OF THE INVENTION

The majority of digital imaging appliances use a Charge Coupled Device (CCD) array or a Complementary Metal-Oxide-Semiconductor (CMOS) sensor to capture a digital image. In order to properly construct an image, light from the object being imaged must be properly focused onto the array or sensor. In auto focusing digital imaging appliances, this is accomplished by acquiring multiple images with different focus settings. A focus figure-of-merit is calculated for each of these images. The figures-of-merit are then used by an algorithm to select the focus setting which focuses the image on the array or sensor.

One popular method to focus a digital imaging appliance is to drive the lens through a number of focus positions and capture a focus image at each of them (typically between 5 and 20 such frames are captured). A focus metric, referred to herein as the figure-of merit, is then accumulated over each image, or significant part thereof, using digital filters which respond to suitable parts of the frequency spectrum (either band-pass or high-pass) and suppress noise. The lens position which corresponds to a peak (measured or interpolated) for one or more zones is then chosen as the focus setting. However the shape of the figure-of-merit depends on the image content and the level of noise. It is difficult to identify a set of parameters that reliably determines if a focus trace includes a suitable focus peak especially in low light where the contribution from noise may be very significant.

Typically systems use multiple parameters that have to be tuned for each focus metric and perhaps for different illumination levels. These can be absolute and or relative figure-of-merit parameters. A lot of time and effort is required to make focus algorithms reliably identify the focus setting which will bring the digital imaging appliance into focus while reliably ignoring noise signals.

US 6512549 B 1 describes an integrated circuit for focus control, in which focus evaluation values are normalized to a difference of a maximum to a minimum evaluation value.

US 2008/0181595 A1 discloses an automatic focusing apparatus in which a focus metric is calculated such that it is insensitive to noise.

SUMMARY OF THE INVENTION

Embodiments of the invention provide for a method, a computer program product, and a digital imaging acquisition appliance adapted for selecting a focus setting.

Embodiments of the invention address the aforementioned problem either by normalizing the figure-of-merit so that a standard set of parameters can be used to test the significance of the focus trace or by determining at least one threshold value that can be used to test the significance of the focus trace. Ideally the response of the figure of merit to image noise for the current exposure (or illumination level) and scene content should be estimated. One way to do this is to capture extra frames in order to estimate the variance or standard deviation of the figure-of-merit.

Normalization proceeds by dividing the figure-of-merit by the noise estimate (standard deviation) and subtracting off the minimum figure-of-merit value (in either order). In practice because of the non-linearities in the calculation of the figure-of-merit the standard deviation of the noise signal is itself dependent on the value of the figure-of-merit. Hence it would be best to capture many frames at each focus setting and use these to capture both mean and variance at each value. However, using as few frames as are strictly necessary reduces time required to focus. The time required to estimate the variance at even a single focus setting is too long.

Embodiments of the invention exploit the fact that for a purely random signal both the arithmetic mean of the absolute value and the root mean square of each pair of successive values are highly correlated with the standard deviation of that signal. Embodiments therefore normalize the focus trace with either the arithmetic mean of the absolute value of each pair of successive values of the figure-of-merit or the root mean square of each pair of successive values of the figure-of-merit. If the figure-of-merit is pure noise, then this is as effective as using the standard deviation. If the figure-of-merit is pure signal, then the focus trace is simply normalized by a fixed proportion of the focus difference. This is acceptable provided that the focus step is a small fraction of the focus range (e.g. less than 1/10$^{th}$ of the focus range). If the figure-of-merit is a mixture of noise and signal, then we get a mixture of these two cases. After normalization the focus trace can be examined for a focus setting which will focus the digital imaging appliance. A peak that is 2, 3, or even 4 times the mean step change is significant and is useful in identifying a focus setting which will focus the digital imaging appliance.

Embodiments of the invention may have the following advantages:

- Normalized figures-of-merit lead to more robust peak selection strategies.
- A standard set of parameters can work across focus metrics and lens designs provided that the focus step is sufficiently small with respect to the total focus ranges (which it needs to be anyway in order to accurately focus the digital imaging appliance).

The term focus setting is defined herein as a measure of the position of the lens relative to a light sensitive element adapted for capturing an image. The focus setting can be the actual distance between or it can be expressed in terms of any variable related to the distance. Examples would be the position of the lens in terms of stepper motors steps or the strength of an electrical signal to an actuator which moves the lens into a predetermined position.

A focus metric is defined herein as a measure of how focused an image is. For example, an image that is not in focus will be blurred, so the variance of the pixels is an example of a focus metric. A focus figure-of-merit or simply a figure-of-merit is defined herein as being a measure of how focused an image is and is used interchangeably with the term focus metric.

A focus trace is defined herein as the focus figure-of-merit as a function of the focus setting. The focus figure-of-merit is typically determined at discrete points. As a result, when the focus trace is plotted values between the discrete points are interpolated or approximated with a function. These values can be linearly interpolated or approximated with a spline function, cubic function, polynomial, or other approximating function. The discrete points of the focus figure-of-merit or the approximated values can be used to analyze the focus trace. A significant focus trend is defined herein as a change in the focus trace which indicates that the digital image acquisition apparatus is becoming more focused or less focused. In other words, a significant focus trend is a change in the focus trace which is able to identify a focus setting which brings the digital image acquisition apparatus into focus.

The invention is defined by the independent claims. Preferred embodiments of the invention are given in the dependent claims aspects of the invention provide for a method for selecting a focus setting for a digital imaging acquisition appliance. The method comprises acquiring at least two images with different focus settings, calculating a figure-of-merit for each of the images, calculating a normalization constant using the figure-of-merit calculated for each of the images, calculating a normalized figure-of-merit for each of the images by dividing the figure-of-merit of each image by the normalization constant, and selecting the focus setting using the normalized figure-of-merit for each of the images and a predetermined selection criteria. This method has the advantage that when selecting a focus setting for a digital image acquisition appliance, it is not feasible to take repeated images at the same focus setting to determine the variance or standard deviation of the figure-of-merit. This method allows an efficient way of estimating the error in the measurement of the figures-of-merit for each of the images. This estimated error can be used to normalize the figure-of-merit calculations. Normalizing the figure-of-merit calculations allows the determination if there is a significant focus trend or not, and allows the identification of a focus setting which will bring the digital imaging apparatus into focus.

In another aspect the normalization constant is calculated by ordering the at least two images in sequence according to the focus setting and then calculating a value of the arithmetic mean of the absolute value of the difference in the figure-of-merit between figures which are nearest neighbors. This value is then the normalization constant. The images are acquired at different focus settings. If the images were acquired sequentially with a monotonically increasing or decreasing focus setting, then they are already ordered. One of the images will have the highest focus setting and one of the images will have a lowest focus setting. The image with the highest focus setting will have only one nearest neighbor as will the image with the lowest focus setting. All of the other images have two nearest neighbors. This aspect has the advantage that it is quick and numerically efficient to calculate the arithmetic mean of the absolute value of the difference in the figure-of-merit between all nearest neighbors. This also has the advantage that the mean absolute difference correlates directly with the standard deviation or variance of the function-of merit. By using this method one is able to make an estimate of a standard deviation or variance without having to take repeated images at each focus setting. This allows the selection of a focus setting to proceed more rapidly than it would if multiple images were acquired.

In another aspect the normalization constant is calculated with the following steps: first the images are ordered according to their focus setting, and then the normalization constant is calculated by taking the root mean square difference in the figures-of-merit between all nearest neighbors. The ordering of the images and the discussion of the nearest neighbors is identical with the previous embodiment. This method has the advantage that the root mean square of the difference in the figure-of-merit between all nearest neighbors also correlates with the standard deviation. This allows the estimation of the standard deviation without having to repeatedly take images at different focus settings and the RMS difference can be used to estimate the error and determine if there is a significant focus trend or not.

In another aspect at least three images are acquired. This has the advantage that this gives a better estimate of the error function.

In another aspect between 4 and 40 images are acquired, and in particular 5 or 20 images are acquired. This aspect is advantageous, because this number of images allows a range of focus settings to be examined. This allows a selection of focuses to be tried and it is more likely that the focus setting which gives the sharpest focus is selected. As the number of images increases, the accuracy of the estimate of the normalization constant also increases.

In another aspect the visual imaging acquisition appliance has a focus range. The at least two images are acquired over the full focus range. This has the advantage that the digital imaging apparatus has surveyed its full focus range, and this ensures that the focus setting which gives the sharpest focus will be selected.

In another aspect the invention provides for a computer program product comprising machine executable instructions for performing any one of the claimed methods. Implementing these methods as a computer program product is advantageous, because the process can be automated with a computer or micro-controller. A computer or micro-controller would be able to implement the method and focus the digital imaging appliance more rapidly than a human would. This also has the advantage that a digital imaging acquisition appliance can be constructed that implements this method and automatically focuses.

In another aspect the invention provides for a digital imaging acquisition appliance. The digital imaging acquisition appliance comprises an image acquisition element, a figure-of-merit calculation element, a normalization constant calculation element, a figure-of-merit normalization element, and a focus settings selection element. The image acquisition element is adapted for acquiring at least two images with different focus settings. Aspects of the invention can also take multiple images at the same focus setting. In this case, the figure-of-merit can be determined by averaging figure-of-merit of the multiple images and/or nearest neighbors with the same focus settings can be included in the calculation of the normalization constant. For example, at least two images can be taken at each focus setting. An average figure-of-merit calculated from the at least two images at each focus setting can be used in calculation of the normalization constant.

The figure-of-merit calculation element is adapted for calculating a figure-of-merit for each of the images. The normalization constant calculation element is adapted for calculating a normalization constant using the values of the figure-of-merit that were calculated by the figure-of-merit calculation element. The figure-of-merit normalization element is adapted for calculating a normalized figure-of-merit for each of the images. It is adapted for dividing the figure-of-merit of each image by the normalization constant. The focus setting selector element is adapted for selecting a focus setting using the normalized figure-of-merit for each of the images using a predetermined selection criteria and can function in several different ways. The figure-of-merit is an estimate of the quality of the focus. The focus setting selector element can simply choose the image with the best focus setting. Another possibility is fitting a curve such as a cubic curve, a spline function, or polynomial to the normalized figure-of-merit data. The maximum of this fitted function is then used to select the focus setting.

In another aspect the digital imaging acquisition appliance is adapted for calculating the arithmetic mean of the absolute value of the difference in the figure-of-merit between the images with adjacent focus settings when the at least two images have been ordered according to their focus settings. This is advantageous because the mean absolute difference correlates with the standard deviation and the method allows the estimation of the noise in the image to be estimated without needing to take multiple images at each focus setting.

In another aspect the digital imaging acquisition appliance is adapted for calculating the normalization constant using the root mean square of the difference in the figure-of-merit between images with adjacent focus settings. The at least two images have been ordered according to their focus settings. This is advantageous, because the root mean square difference is directly correlated with the standard deviation also. Again this allows the estimation of the error in the figure-of-merit without needing to take multiple images at the same focus setting.

In another aspect the digital imaging acquisition appliance acquires at least three images. This is advantageous because as the number of images increase, the accuracy of the estimate in the normalization constant improves.

In another aspect the digital imaging acquisition appliance is adapted for acquiring between 4 and 40 images in particular being adapted for acquiring between 5 and 20 images. This is advantageous, because the accuracy of the estimate in the normalization constant increases as the number of images is increased. Using between 5 and 20 images is particularly advantageous, because digital imaging acquisition appliances are adapted for taking this many images rapidly and making an estimate of the focus setting. With fewer images the estimate of the normalization constant is worse and with a larger number of images it can take too long to bring digital imaging appliance into focus.

In another aspect the digital imaging acquisition appliance has a focus range, and the image acquisition element is adapted for acquiring the at least two images over the full focus range. This is advantageous, because this covers the full range of the focus settings and allows the digital imaging acquisition appliance to make an accurate estimate of the proper focus setting.

In another aspect the invention provides for a digital imaging acquisition appliance. The digital imaging acquisition appliance comprises an image acquisition element, a figure-of-merit calculation element, a noise estimate calculation element, a threshold determination element, and a focus settings selection element. The image acquisition element is adapted for acquiring at least two images with different focus settings. Aspects of the invention can also take multiple images at the same focus setting. In this case, the figure-of-merit can be determined by averaging figure-of-merit of the multiple images and/or nearest neighbors with the same focus settings can be included in the calculation of the normalization constant. For example, at least two images can be taken at each focus setting. An average figure-of-merit calculated from the at least two images at each focus setting can be used in calculation of the normalization constant.

The figure-of-merit calculation element is adapted for calculating a figure-of-merit for each of the images. The noise estimate element is adapted for estimating the noise in the values of the figure-of-merit that were calculated by the figure-of-merit calculation element. The threshold determination element is adapted for determining at least one threshold value based on the value of the noise estimate. These are thresholds which values of the figure-of-merit are compared against and are a function of the noise estimate. These values can be set relative to some other value such as the maximum figure-of-merit calculated, the minimum figure-of-merit calculated, the average figure-of-merit calculated, zero, or a baseline value calculated from the figure-of-merit values. The focus setting selector element uses the at least one threshold value, the figure-of-merit values, and a predetermined selection criteria to select a focus setting. The figure-of-merit is an estimate of the quality of the focus, so the focus setting selector element can simply choose the image with the best focus setting. Another possibility is fitting a curve such as a cubic curve, a spline function, or polynomial to the normalized figure-of-merit data. The focus setting selection element uses the threshold values to determine if a focus setting should be used for focusing the digital imaging appliance or if it should be rejected.

In another aspect, the noise estimate calculation element of the digital imaging acquisition appliance is adapted to determine the estimate of the noise by calculating either the arithmetic mean of the absolute value of the difference in the figure-of-merit between images with adjacent focus settings or by calculating the root mean square of the difference in the figure-of-merit between images with adjacent focus settings. This aspect has the advantage that both the root mean square of the difference in the figure-of-merit between images with adjacent focus settings and the arithmetic mean of the absolute value of the difference in the figure-of-merit between images with adjacent focus settings are directly correlated with the standard deviation.
This allows the estimation of the standard deviation without having to repeatedly take images at different focus settings.

In another aspect the digital imaging acquisition appliance acquires at least three images. This is advantageous because as the number of images increase, the accuracy of the estimate in the normalization constant improves.

In another aspect the digital imaging acquisition appliance is adapted for acquiring between 4 and 40 images in particular being adapted for acquiring between 5 and 20 images. This is advantageous, because the accuracy of the estimate in the normalization constant increases as the number of images is increased. Using between 5 and 20 images is particularly advantageous, because digital imaging acquisition appliances are adapted for taking this many images rapidly and making an estimate of the focus setting. With fewer images the estimate of the normalization constant is worse and with a larger number of images it can take too long to bring digital imaging appliance into focus.

In another aspect the digital imaging acquisition appliance has a focus range, and the image acquisition element is adapted for acquiring the at least two images over the full focus range. This is advantageous, because this covers the full range of the focus settings and allows the digital imaging acquisition appliance to make an accurate estimate of the proper focus setting.

In another aspect, embodiment of the invention provide for a method for selecting a focus setting for a digital imaging acquisition appliance. The method comprises acquiring at least two images with different focus settings, calculating a figure-of-merit for each of the images, calculating a noise estimate using the values of the figure-of-merit that were calculated for each of the images, and determining at least one threshold value using: the noise estimate, and selecting a focus setting using the figure-of merit value calculated for each of the images, and a predetermined selection criteria. This method has the advantage that when selecting a focus setting for a digital image acquisition appliance, it is not feasible to take repeated images at the same focus setting to determine the variance or standard deviation of the figure-of-merit. This method allows an efficient way of estimating the error in the measurement of the figures-of-merit for each of the images. This estimated error can be used to determine threshold values which allows the determination if there is a significant focus trend or not, and allows the identification of a focus setting which will bring the digital imaging apparatus into focus.

In another aspect the noise estimate is calculated by ordering the at least two images in sequence according to the focus setting and then calculating a value of the arithmetic mean of the absolute value of the difference in the figure-of-merit between figures which are nearest neighbors. This value is then the noise estimate. The images are acquired at different focus settings. If the images were acquired sequentially with a monotonically increasing or decreasing focus setting, then they are already ordered. One of the images will have the highest focus setting and one of the images will have a lowest focus setting. The image with the highest focus setting will have only one nearest neighbor as will the image with the lowest focus setting. All of the other images have two nearest neighbors. This aspect has the advantage that it is quick and numerically efficient to calculate the arithmetic mean of the absolute value of the difference in the figure-of-merit between all nearest neighbors. This also has the advantage that the mean absolute difference correlates directly with the standard deviation or variance of the function-of merit. By using this method one is able to make an estimate of a standard deviation or variance without having to take repeated images at each focus setting. This allows the selection of a focus setting to proceed more rapidly than it would if multiple images were acquired.

In another aspect the noise estimate is calculated with the following steps: first the images are ordered according to their focus setting, and then the noise estimate is calculated by taking the root mean square difference in the figures-of-merit between all nearest neighbors. The ordering of the images and the discussion of the nearest neighbors is identical with the previous embodiment. This method has the advantage that the root mean square of the difference in the figure-of-merit between all nearest neighbors also correlates with the standard deviation. This allows the estimation of the standard deviation without having to repeatedly take images at different focus settings and the RMS difference can be used to estimate the error and determine if there is a significant focus trend or not.

In another aspect between 4 and 40 images are acquired, and in particular 5 or 20 images are acquired. This aspect is advantageous, because this number of images allows a range of focus settings to be examined. This allows a selection of focuses to be tried and it is more likely that the focus setting which gives the sharpest focus is selected. As the number of images increases, the accuracy of the estimate of the normalization constant also increases.

In another aspect the visual imaging acquisition appliance has a focus range. The at least two images are acquired over the full focus range. This has the advantage that the digital imaging apparatus has surveyed its full focus range, and this ensures that the focus setting which gives the sharpest focus will be selected.

In another aspect the invention provides for a computer program product comprising machine executable instructions for performing any one of the claimed methods. Implementing these methods as a computer program product is advantageous, because the process can be automated with a computer or micro-controller. A computer or micro-controller would be able to implement the method and focus the digital imaging appliance more rapidly than a human would. This also has the advantage that a digital imaging acquisition appliance can be constructed that implements this method and automatically focuses.

BRIEF DESCRIPTION OF THE DRAWINGS

In the following preferred embodiments of the invention will be described, by way of example only, and with reference to the drawings in which:

Fig. 1     block diagram of an embodiment of a method for selecting a focus setting,
Fig. 2     functional diagram of an embodiment of a digital image acquisition appliance,
Fig. 3     diagram of an exemplary focus trace which has a clearly defined maximum for the focus figure-of-merit,
Fig. 4     diagram of an exemplary focus trace and a normalized focus trace showing a significant focus trend,
Fig. 5     diagram of an exemplary focus trace and a normalized focus trend that do not show a significant focus trend,
Fig. 6     plot showing the correlation between the mean absolute difference and the standard deviation,
Fig. 7     plot showing the correlation between the root mean square difference and the standard deviation,
Fig. 8     block diagram of an embodiment of a method for selecting a focus setting,
Fig. 9     functional diagram of an embodiment of a digital image acquisition appliance,
Fig. 10    diagram of an exemplary focus trace showing the use of a threshold value to identify a focus setting,
Fig. 11    diagram of an exemplary focus trace showing the use of a threshold value to reject a focus setting,
Fig. 12    diagram of an exemplary focus trace showing two threshold values.

DETAILED DESCRIPTION

Like numbered elements in these figures are either identical elements or perform the same function. Elements which have been discussed previously will not necessarily be discussed in later figures if the function is identical.

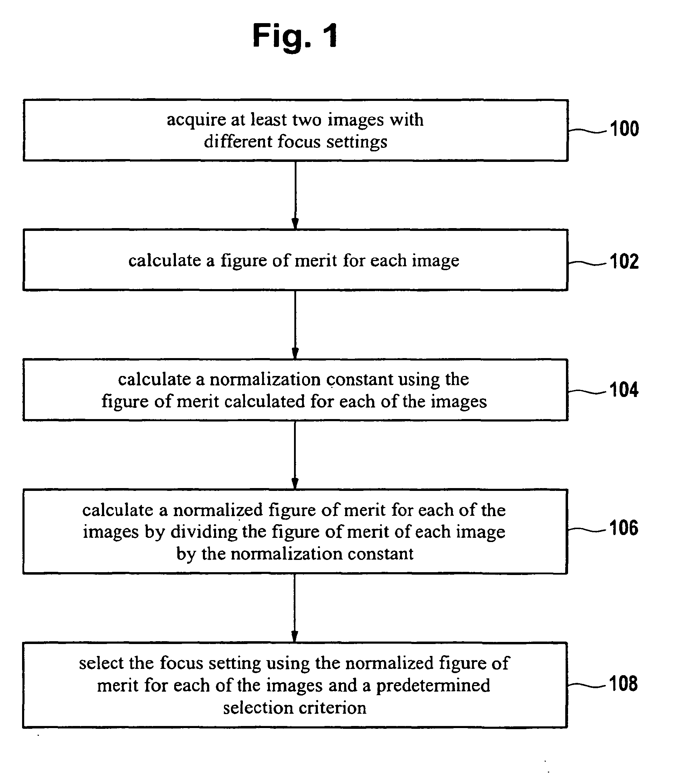

Figure 1 shows a block diagram of an embodiment of the method of the invention. The method comprises acquiring at least two images with the different focus setting 100, calculating a figure-of-merit for each image 102, calculating a normalization constant using the figure-of-merit calculated for each of the images 104, calculating a normalized figure-of-merit for each of the images by dividing the figure-of-merit by each image by the normalization constant 106, and selecting the focus setting using the normalized figure-of-merit for each of the images and a predetermined selection criteria 108.

In the first step of the method at least two images are acquired with different focus settings 100. Embodiments of the invention have the advantage that the standard deviation or the variance in the figure-of-merit for a particular focus setting can be approximated up to a scale factor without the need to repeat the measurement multiple times at the same focus setting.

In a next step the figure-of-merit is calculated for each image that was acquired. The figure-of-merit is simply a measure of how accurately focused a particular image is. This can be done using standard hardware implementation or software. As an image becomes less focused, the image becomes more blurred so an example of a figure-of-merit or focus metric would be calculating the variance of the pixels in a region of an image. Alternatively a digital filter of some kind can be applied to the image which is able to both suppress noise and identify a suitable frequency content in the image. The figure of merit can then be chosen as the accumulated absolute or square value of the so filtered image. High pass filters and band pass filters are both useful in this regard.

In a next step the normalization constant is calculated using the figures-of-merit calculated for each of the images 104. In one embodiment the normalization constant is calculated by calculating the value of the arithmetic mean of the absolute value of the difference in the figure-of-merit between all the nearest neighbors. An example of how to calculate this is shown in equation 1.

$$(1) \qquad C = \frac{1}{N-1} \sum_{i=1}^{N-1} \left| f(x_{i+1}) - f(x_i) \right|,$$

where C is the normalization constant, f(x) is the figure of merit corresponding to focus setting *x, N* is the number of images acquired, and i is an index variable used to label the images.

In another embodiment the value of the normalization constant is calculated by calculating the value of the root mean square of the difference in the figure-of-merit between all nearest neighbors. An example of how to calculate this is illustrated in equation 2:

$$(2) \qquad C = \left( \frac{1}{N-1} \sum_{i=1}^{N-1} (f(x_{i+1}) - f(x_i))^2 \right)^{1/2},$$

where *C* is the normalization constant, *f(x)* is the figure of merit corresponding to focus setting *x, N* is the number of images acquired, and *i* is an index variable used to label the images.

Once the normalization constant has been calculated, the normalized focus trace is calculated by subtracting the figure-of-merit with the smallest value from the focus trace and then dividing the figure-of merit at each focus setting by the normalization constant 106. Finally a focus setting is selected using the normalized figure-of-merit and a predetermined selection criteria 108. Examples of how the focus setting can be selected are by choosing the focus setting which has the figure-of-merit which indicates the highest level of focus, or determining the maximum of a function fit to the normalized figure-of-merit.

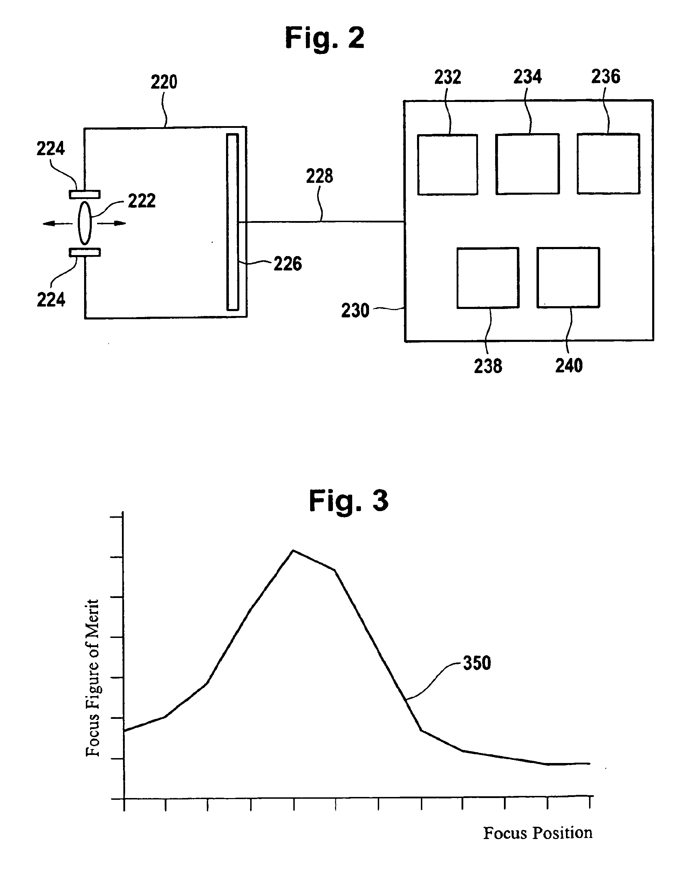

Figure 2 shows an embodiment of a digital imaging acquisition appliance adapted for performing the invention. There is a housing 220 which encloses a CCD array 226. The CCD array 226 is adapted for constructing a digital image of objects that are imaged on a surface. There is a lens 222 which is adapted for focusing an image onto the CCD array 226. There is an actuator 224 which is adapted for changing the focus setting of the lens 222. The actuators are mounted onto the housing 220. There is a connection between the CCD array 226 and an electronics assembly 230 of the digital imaging acquisition appliance. The electronics assembly 230 can be implemented as specific purpose integrated circuits, it can be integrated as a micro-controller or computer with machine executable instructions, or it can be a combination of specialized chips and micro-controllers or microprocessors with machine executable instructions.

The electronics assembly 230 comprises a CCD array controller 232. The CCD array controller controls and powers and operates the CCD array 226. Much of the functionality of the other elements of the electronics assembly 230 can also be integrated into the CCD array controller chip 232.

Within the electronics assembly 230 there is a figure-of-merit calculation element 234, a normalization constant calculation element 236, a figure-of-merit normalization element 238, and a focus setting selection element 240. The figure-of-merit calculation element 234 is adapted for calculating a figure-of-merit for a digital image. The normalization constant calculation element 236 is adapted for calculating the normalization constant from the figures-of-merit calculated for the images. Once the normalization constant has been calculated, the figure-of-merit normalization element 238 normalizes the figure-of-merit. Once the figure-of-merit has been normalized, the focus setting selection element 240 uses this information to determine a focus setting for focusing the digital imaging appliance.

Figure 3 shows an illustration of a focus trace 350 that illustrates a clearly defined maximum for the focus figure-of-merit. In this image the focus trace 350 clearly shows a maximum and in this figure it is easily discernible that there is a significant focus trend.

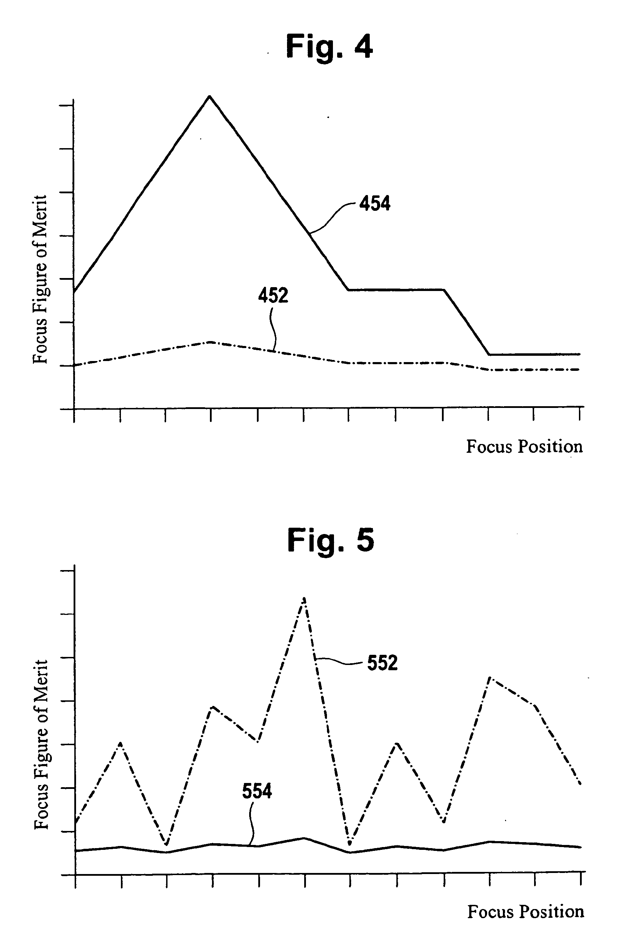

Figure 4 shows an illustration of a focus trace 452 and its normalized focus trace which shows a significant focus trend. This illustration shows the focus figure-of-merit as a function of the focus setting. Focus trace 452 illustrates what a focus figure-of merit would look like when there is little variation in the focus figure-of-merit. Focus trace 454 is the same focus trace 452 that has been normalized. The normalized focus trace 454 shows an obvious peak and a maximum. This figure demonstrates that the method and apparatus can be used to determine a focus figure-of-merit when the normalization is calculated.

Figure 5 shows an illustration of an exemplary focus trace 552 when the focus figure-of-merit data is noisy. The illustration of the acquired focus trace is line 552. After normalization, line 554 illustrates the normalized focus trace. The normalized focus trace 554 does not show a significant focus trend.

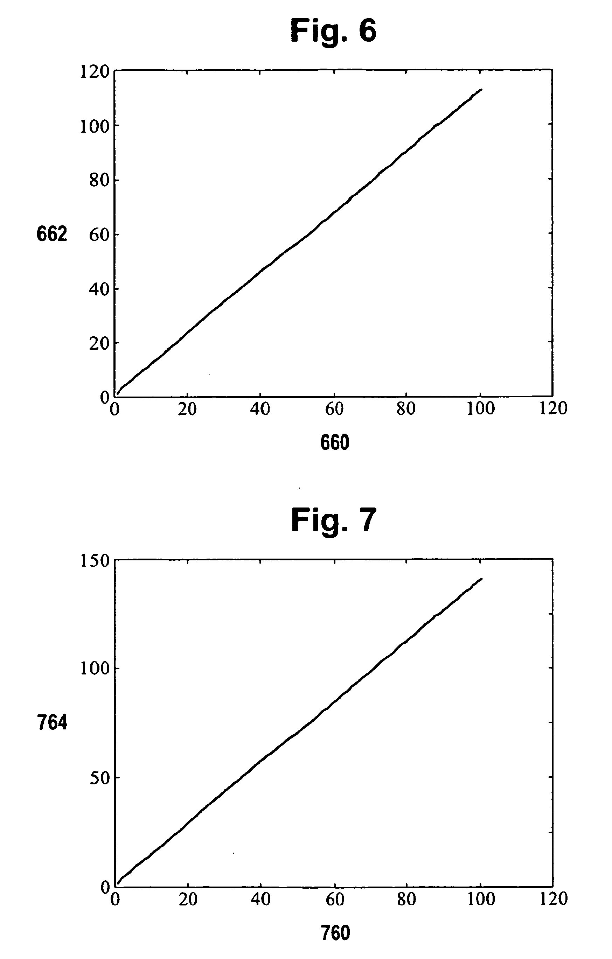

Figure 6 shows a plot of this data deviation 660 versus the mean absolute difference 662. This figure demonstrates the correlation between the standard deviation and the mean absolute difference, and therefore the validity of estimating the standard deviation using the mean absolute difference. This plot was generated by first generating a normal distribution with 10,000 points with a particular standard deviation. This normal distribution was used to calculate the mean absolute difference, and this was repeated for different normal distributions with different values of the standard deviation. The plot then shows the mean absolute difference 662 as a function of the standard deviation 660. In this figure we can see that there is a direct correlation between the mean absolute difference 662 and the standard deviation 660. This validates the approach of using the mean absolute difference as an estimate of the standard deviation or the variance in a figure-of-merit calculation.

Figure 7 shows a plot similar to figure 6. However, figure 7 shows the correlation between the root mean square difference and the standard deviation. In this plot, a normal distribution with 10,000 points with a particular standard deviation was generated and then the root mean square difference of this normal distribution was calculated. This was repeated at different values of the standard deviation to construct this plot. In figure 7, it can be see that the root mean square difference 764 of this normal distribution is a linear function of the standard deviation 760. This validates the estimation of the standard deviation using the root mean square difference.

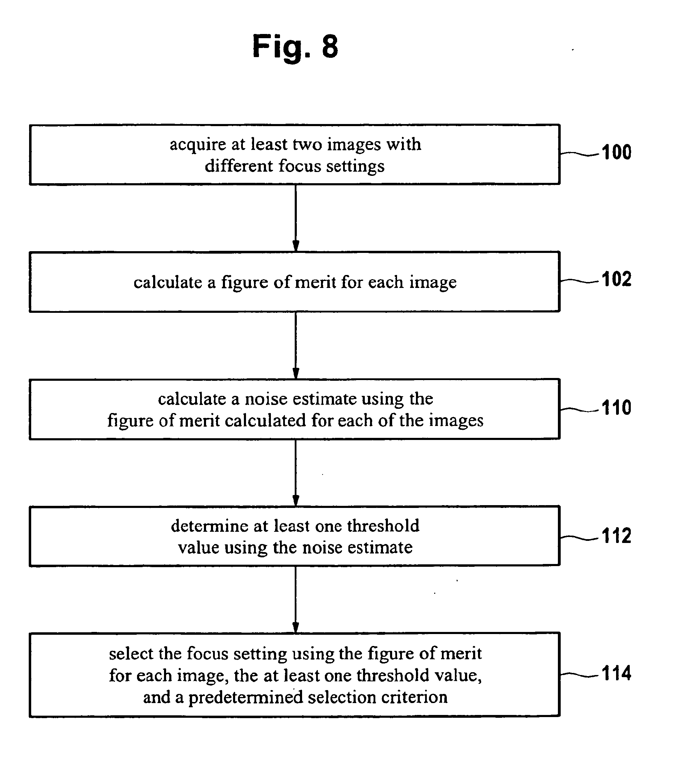

Figure 8 shows a block diagram of an embodiment of the method of the invention. The method comprises acquiring at least two images with the different focus setting 100, calculating a figure-of-merit for each image 102, calculating a noise estimate using the figure of merit calculated for each image 110, determining at least one threshold value using the noise estimate 112, and selecting the focus setting using the figure of merit for each image, the at least one threshold value and a predetermined selection criteria 114.

In the first step of the method at least two images are acquired with different focus settings 100. Embodiments of the invention have the advantage that the standard deviation or the variance in the figure-of-merit for a particular focus setting can be approximated up to a scale factor without the need to repeat the measurement multiple times at the same focus setting.

Next, the figure-of-merit is calculated 102 for each image that was acquired. The figure-of-merit is simply a measure of how accurately focused a particular image is. This can be done using standard hardware implementation or software. As an image becomes less focused, the image becomes more blurred so an example of a figure-of-merit or focus metric would be calculating the variance of the pixels in a region of an image. Alternatively a digital filter of some kind can be applied to the image which is able to both suppress noise and identify a suitable frequency content in the image. The figure of merit can then be chosen as the accumulated absolute or square value of the so filtered image. High pass filters and band pass filters are both useful in this regard.

Next, a noise estimate is calculated using the figures-of-merit calculated for each of the images 110. In one embodiment the noise estimate is calculated by calculating the value of the arithmetic mean of the absolute value of the difference in the figure-of-merit between all the nearest neighbors. An example of how to calculate this is shown in equation 3.

$$(3) \qquad D = \frac{1}{N-1} \sum_{i=1}^{N-1} \left| f(x_{i+1}) - f(x_i) \right| \, ,$$

where $D$ is the noise estimate, $f(x)$ is the figure of merit corresponding to focus setting $x$, $N$ is the number of images acquired, and $i$ is an index variable used to label the images.

In another embodiment the value of the noise estimate is calculated by calculating the value of the root mean square of the difference in the figure-of-merit between all nearest neighbors. An example of how to calculate this is illustrated in equation 4:

$$(4) \qquad D = \left( \frac{1}{N-1} \sum_{i=1}^{N-1} \left( f(x_{i+1}) - f(x_i) \right)^2 \right)^{1/2} \, ,$$

where $D$ is the noise estimate, $f(x)$ is the figure of merit corresponding to focus setting x, $N$ is the number of images acquired, and $i$ is an index variable used to label the images.

Once the noise estimate has been calculated, at least one threshold value is determined using an estimate of the noise 112. The threshold values are values which the figure-of-merit for each image are compared against. The threshold values can be calculated relative to zero, relative to the maximum value of the figures-of-merit, relative to the minimum value of the figure-of-merit, or relative to a baseline value. An example of a baseline value would be the average value of the figure-of-merit.

Finally, a focus setting is selected using the figure-of-merit for each image, the at least one threshold value, and a predetermined selection criteria 114. Embodiments demonstrating how the focus setting can be selected are given below.

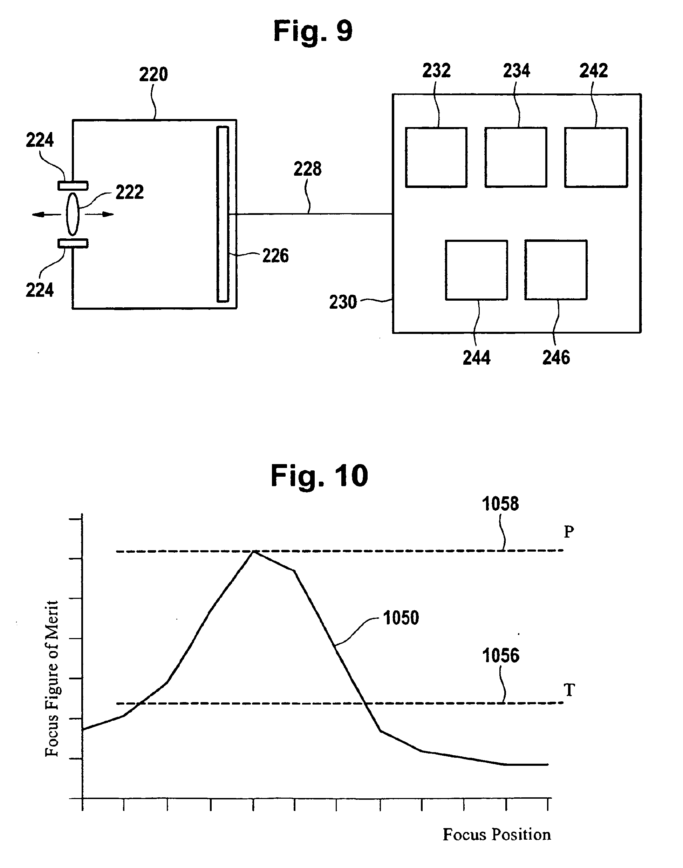

Figure 9 shows an embodiment of a digital imaging acquisition appliance adapted for performing the invention. There is a housing 220 which encloses a CCD array 226. The CCD array 226 is adapted for constructing a digital image of objects that are imaged on a surface. There is a lens 222 which is adapted for focusing an image onto the CCD array 226. There is an actuator 224 which is adapted for changing the focus setting of the lens 222. The actuators are mounted onto the housing 220. There is a connection between the CCD array 226 and an electronics assembly 230 of the digital imaging acquisition appliance. The electronics assembly 230 can be implemented as specific purpose integrated circuits, it can be integrated as a micro-controller or computer with machine executable instructions, or it can be a combination of specialized chips and micro-controllers or microprocessors with machine executable instructions.

The electronics assembly 230 comprises a CCD array controller 232. The CCD array controller controls and powers and operates the CCD array 226. Much of the functionality of the other elements of the electronics assembly 230 can also be integrated into the CCD array controller chip 232.

Within the electronics assembly 230 there is a figure-of-merit calculation element 234, a noise estimate calculation element 242, a threshold determination element 244 and a focus setting selection element 246. The figure-of-merit calculation element 234 is adapted for calculating a figure-of-merit for a digital image. The noise estimate calculation element 242 is adapted for calculating an estimate of the noise in the values of the figure-of-merit calculated for the images. Once the noise estimate has been calculated, the threshold determination element 244 determines the value of at least one threshold that will be used to accept or reject a potential focus setting for acquiring a digital image. After the at least one threshold has been determined, the focus setting selection element 246 uses this information to select a focus setting for focusing the digital imaging appliance.

Figure 10 shows an illustration of an embodiment of how a threshold value 1056 can be used to determine if the maximum 1058 of the focus trace 1058 is significant and should be selected as a focus setting for acquiring a digital image. First, the maximum value 1058 of the focus trace is found. This is labeled P on the illustration. Second, a threshold value 1056 is determined that is 4 times the calculated noise estimate below the peak value. If the figure of merit is normalized, then this would corresponds to 4 units of the normalized focus trace. Other factors besides 4 can also be used. For example, a factor of between 2 and 10 are possible. This threshold value is labeled as T. It is then checked if the focus trace 1050 has a value below the threshold value 1056 at some focus setting. In this illustration, the focus trace 1050 does go below the threshold value 1056. Hence the focus trace 1050 shown in figure 10 shows a focus setting suitable for acquiring a digital image. In this example, the maximum measured figure-of-merit was used to set the value of P. However, in an alternative embodiment, a function such as a spline function, cubic function, quadratic function, or a polynomial can be fit to the calculated figure-of-merit values. In this case, the maximum value of the function can be used to set the value of P. In another embodiment, the value of P is set to the maximum 1058 value of the figure-of-merit, however a function is fit to the calculated values of the figure-of-merit and the maximum of the function is selected to be the focus setting used to acquire a digital image.

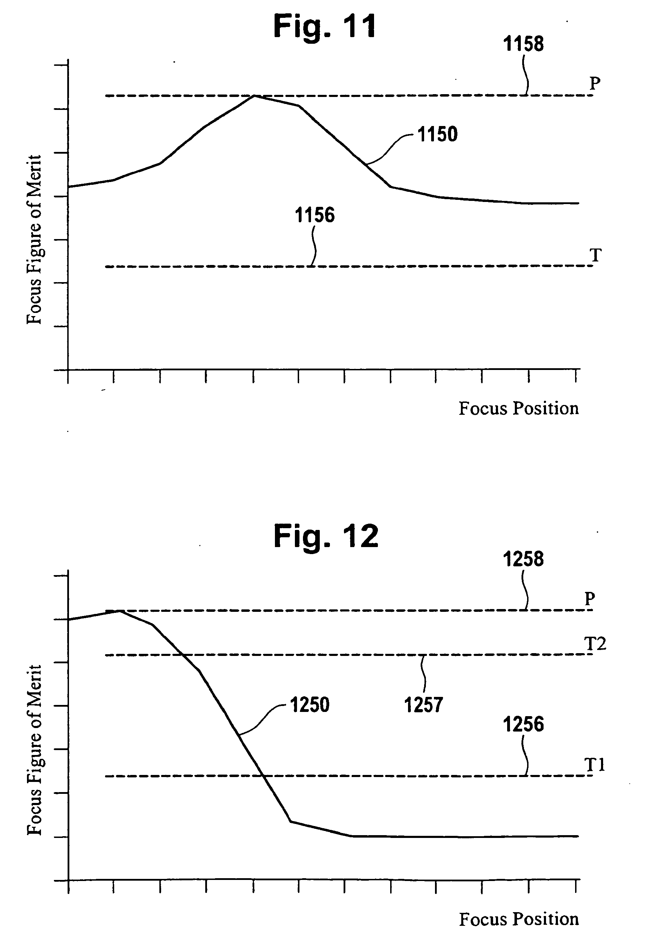

Figure 11 shows an illustration of an embodiment of how a threshold value 1156 is used to determine if the maximum 1158 of a focus trace 1150 is not significant and should therefore not be selected as a focus setting for acquiring digital images. The example illustrated in figure 11 is very similar to the example illustrated in figure 10. Again, the threshold value 1156 is 4 times the noise estimate below the maximum 1158. The maximum 1158 is labeled as P, and the threshold value 1156 is labeled as T. In this illustration, the focus trace 1150 does not have a value below the threshold 1156. Therefore, the focus trace 1150 does not show a significant focus trend, and the maximum of the focus trace 1150 should not be selected as a focus setting used to acquire a digital image.

Figure 12 shows a more sophisticated embodiment of selecting a focus setting than was shown in figures 10 and 11. In this case two threshold values are used. First, the maximum value of the focus trace 1250 is found, this is labeled P in the illustration. Next, two threshold values are found. The first threshold value 1256 is labeled T1 and the second threshold value 1257 is labeled T2. In this example, T 1 is set to a value that is a factor of 4 larger than the noise estimate below P and T2 is set to a value equal to the noise estimate below P. These values are only exemplary, and T1 and T2 can be scaled by other factors.

The embodiment presented in figure 12 is similar to those presented in figures 10 and 11, but this embodiment is able to differentiate if a focus trace maximum 1258 is a suitable focus setting for acquiring a digital image and in addition if it is close to the infinity or the macro focus setting. A focus setting of infinity means that the focus of the lens is set to focus at infinity, whereas a focus setting of macro is the setting which focuses for the shortest distance possible. With, peaks too close to infinity or macro it can be advisable to take appropriate actions and avoid using an interpolating function such as a quadratic, cubic, or other function as these cannot be used to interpolate the figure of merit at the end points.

For the peak of the focus trace 1250 to be identified as being suitable as a focus setting for acquiring digital images, the focus trace 1250 must dip below T1 1256 on one side of the maximum and below T2 1257 on the other side of the maximum of the focus trace 1258. If the focus trace 1250 dips below T1 1256 on one side of the maximum 1258 of the focus trace 1250, but stays above T2 on the other side of the maximum 1258 of the focus trace 1250, then it is considered to be stuck at an extreme of the focus setting (either infinity or macro). Fore some types of lenses the actual focus setting that corresponds to macro or infinity may itself be a large number of the units that the focus setting is measured in from one of these limiting values. Furthermore, the focus setting that corresponds to macro or infinity may itself vary from individual digital imaging acquisition apparatus to digital imaging acquisition apparatus due to the age of the device or its operational condition. In these cases it is advantageous to have an algorithm such as this one which is able to automatically determine if the focus setting does in fact correspond to infinity or macro.

LIST OF REFERENCE NUMERALS

| | |
|---|---|
| 100 | Acquire at least two images with different focus settings |
| 102 | Calculate a figure-of-merit for each image |
| 104 | Calculate a normalization curve constant using the figure-of-merit calculated for each of the images |
| 106 | Calculate a normalized figure-of-merit for each of the images by dividing the figure-of-merit of each image by the normalization constant |
| 108 | Select the focus setting using the normalized figure-of-merit for each of the images and a predetermined selection criteria |
| 110 | Calculate a noise estimate using the figure of merit calculated for each of the images |
| 112 | Determine at least one threshold value using the noise estimate |
| 114 | Select the focus setting using the figure of merit for each image, the at least one threshold value and a predetermined selection criteria |
| 220 | Housing |
| 222 | Lens |
| 224 | Actuator |
| 226 | CCD array |
| 228 | Connection between CCD array and electronics assembly |
| 230 | Electronics assembly |
| 232 | CCD array controller |
| 234 | Figure-of-merit calculation element |
| 236 | Normalization constant calculation element |
| 238 | Figure-of-merit normalization element |
| 240 | Focus setting selection element |
| 242 | Noise estimate calculation element |
| 244 | Threshold determination element |
| 246 | Focus setting selection element |
| 350 | Focus trace |
| 452 | Focus trace |
| 454 | Normalized focus trace |
| 552 | Focus trace |
| 554 | Normalized focus trace |
| 660 | Standard deviation |
| 662 | Mean absolute difference |
| 760 | Standard deviation |
| 764 | Root mean square difference |
| 1050 | Focus trace |
| 1056 | Threshold value |
| 1058 | Maximum value of focus trace |
| 1150 | Focus trace |
| 1156 | Threshold value |
| 1158 | Maximum value of focus trace |
| 1250 | Focus trace |
| 1256 | First threshold value |

(continued)

| 1257 | Second threshold value |
| 1258 | Maximum value of focus trace |

**Claims**

1. A method for selecting a focus setting, corresponding to a measure of the position at a focus lens, for a digital image acquisition appliance, the method comprising:

   acquiring at least two images, the images being acquired with different focus settings (100),
   calculating a figure-of-merit for each of the images (102),
   ordering the at least two images in a sequence according to their focus setting, the images comprising a first image with a highest focus setting and a second image with a lowest focus setting, the first and second images having only one nearest neighbor, all of the other images of the at least two images having two nearest neighbors, either calculating a value of the arithmetic mean of the absolute value of the difference in the figure-of-merit between all nearest neighbors, the value being a normalization constant or calculating a value of the root mean square of the difference in the figure-of- merit between all nearest neighbors, the value being a normalization constant (104)
   calculating a normalized figure-of-merit for each of the images by dividing the figure-of-merit of each image by the normalization constant (106),
   selecting the focus setting using the normalized figure-of-merit for each of the images and a predetermined selection criteria (108).

2. The method of claim 1, wherein at least three images are acquired.

3. The method of anyone of the proceeding claims, wherein between 4 and 40 images are acquired, in particular 5 to 20 images are acquired.

4. The method of anyone of the proceeding claims, where in the digital image acquisition appliance has a focus range, wherein the at least two images are acquired over the full focus range.

5. A computer program product comprising machine executable instructions for performing a method according to any one of the proceeding claims.

6. A digital imaging acquisition appliance comprising:

   an image acquisition element (220,222, 224,226,228,230,232) for acquiring at least two images, the images being acquired with different focus settings, corresponding to a measure of the position of a focus lens (222),
   a figure-of-merit calculation element (234) for calculating a figure-of-merit for each of the images,
   a normalization constant calculation element (236) for either calculating a value of the arithmetic mean of the absolute value of the difference (662) in the figure-of-merit between images with adjacent focus settings when the at least two images have been ordered according to their focus settings, the value being a normalization constant or calculating a value of the root mean square of the difference (764) in the figure-of-merit between images with adjacent focus settings when the at least two images have been ordered according to their focus settings, the value being a normalization constant,
   a figure-of-merit normalization element (238) for calculating a normalized figure-of-merit for each of the images by dividing the figure-of-merit of each image by the normalization constant,
   a focus setting selection element (240) for selecting the focus setting using the normalized figure-of-merit for each of the images and a predetermined selection criteria.

7. The digital image acquisition appliance of claim 6, wherein the image acquisition element is adapted for acquiring at least 3 images.

8. The digital imaging acquisition appliance of claim 6, wherein the image acquisition element is adapted for acquiring between 4 and 40 images, in particular being adapted for acquiring between 5 and 20 images.

**9.** The digital imaging acquisition appliance of anyone of claims 6 through 8, wherein the digital image acquisition appliance has a focus range, wherein the image acquisition element is adapted for acquiring the at least two images over the full focus range.

**Patentansprüche**

**1.** Verfahren zur Auswahl einer Fokus-Einstellung entsprechend einer Positionsmaßgabe einer Einstelllupe für ein digitales Bilderfassungsgeräts, wobei das Verfahren Folgendes umfasst:

Erfassen von wenigstens zwei Bildern, wobei die Bilder mit verschiedenen Fokus-Einstellungen (100) erfasst werden,
Errechnen eines Bewertungsfaktors für jedes der Bilder (102),
Ordnen der wenigstens zwei Bilder in einer Reihenfolge entsprechend deren Fokus-Einstellung, wobei die Bilder ein erstes Bild mit einer höchsten Fokus-Einstellung und ein zweites Bild mit einer niedrigsten Fokus-Einstellung umfassen, wobei die ersten und zweiten Bilder nur einen nächsten Nachbarn aufweisen, wobei alle der anderen Bilder der wenigstens zwei Bilder zwei nächste Nachbarn aufweisen,
entweder Errechnen eines Werts des Mittelwerts des Absolutwerts der Differenz des Bewertungsfaktors zwischen allen nächsten Nachbarn, wobei der Wert eine Normalisierungskonstante ist, oder Errechnen eines Werts des Effektivwerts der Differenz des Bewertungsfaktors zwischen allen nächsten Nachbarn, wobei der Werte eine Normalisierungskonstante (104) ist, sowie
Errechnen eines normalisierten Bewertungsfaktors für jedes der Bilder durch Teilen des Bewertungsfaktors jedes Bilds durch die Normalisierungskonstante (106),
Auswahl der Fokus-Einstellung unter Verwendung des normalisierten Bewertungsfaktors für jedes der Bilder sowie eines vorbestimmten Auswahlkriteriums (108).

**2.** Verfahren nach Anspruch 1, wobei wenigstens drei Bilder erfasst werden.

**3.** Verfahren nach einem der vorstehenden Ansprüche, wobei zwischen 4 und 40 Bilder erfasst werden, insbesondere 5 bis 20 Bilder erfasst werden.

**4.** Verfahren nach einem der vorstehenden Ansprüche, wobei das digitale Bilderfassungsgerät einen Fokusbereich aufweist, bei dem die wenigstens zwei Bilder über den vollständigen Fokusbereich erfasst werden.

**5.** Computerprogrammprodukt, umfassend maschinenausführbare Anleitungen zur Durchführung eines Verfahrens gemäß einem der vorstehenden Ansprüche.

**6.** Digitales Bilderfassungsgerät, umfassend:

ein Bilderfassungselement (220, 222, 224, 226, 228, 230, 232) zur Erfassung von wenigstens zwei Bildern, wobei die Bilder mit verschiedenen Fokus-Einstellungen entsprechend der Positionsmaßgabe einer Einstelllupe (222) erfasst werden,
ein Bewertungsfaktor-Errechnungselement (234) zum Errechnen eines Bewertungsfaktors für jedes der Bilder,
ein Normalisierungskonstanten-Errechnungselement (236) entweder zum Errechnen eines Werts des Mittelwerts des Absolutwerts der Differenz (662) des Bewertungsfaktors zwischen Bildern mit benachbarten Fokus-Einstellungen, wenn die wenigstens zwei Bilder entsprechend deren Fokus-Einstellungen geordnet worden sind, wobei der Wert eine Normalisierungskonstante ist, oder zum Errechnen eines Werts des Effektivwerts der Differenz (764) des Bewertungsfaktors zwischen Bildern mit benachbarten Fokus-Einstellungen, wenn die wenigstens zwei Bilder entsprechend deren Fokus-Einstellungen geordnet worden sind, wobei der Wert eine Normalisierungskonstante ist,
ein Bewertungsfaktor-Normalisierungselement (238) zum Errechnen eines normalisierten Bewertungsfaktors für jedes der Bilder durch Teilen des Bewertungsfaktors jedes Bilds durch die Normalisierungskonstante,
ein Fokus-Einstellungs-Auswahlelement (240) zur Auswahl der Fokus-Einstellung unter Verwendung des normalisierten Bewertungsfaktors für jedes der Bilder sowie eines vorbestimmten Auswahlkriteriums.

**7.** Digitales Bilderfassungsgerät nach Anspruch 6, wobei das Bilderfassungselement zur Erfassung von wenigstens 3 Bildern adaptiert ist.

8. Digitales Bilderfassungsgerät nach Anspruch 6, wobei das Bilderfassungselement zur Erfassung von zwischen 4 und 40 Bildern adaptiert ist, insbesondere zur Erfassung von zwischen 5 und 20 Bildern adaptiert ist.

9. Digitales Bilderfassungsgerät nach einem der Ansprüche 6 bis 8, wobei das digitale Bilderfassungsgerät einen Fokusbereich aufweist, wobei das Bilderfassungselement zur Erfassung von wenigstens zwei Bildern über den vollständigen Fokusbereich adaptiert ist.

**Revendications**

1. Procédé de sélection d'un réglage de mise au point, correspondant à une mesure de la position d'une lentille de mise au point, pour un appareil d'acquisition d'image numérique, le procédé comprenant :

   l'acquisition d'au moins deux images, les images étant acquises avec différents réglages de mise au point (100),
   le calcul d'un facteur de mérite pour chacune des images (102),
   l'ordonnancement des au moins deux images dans une séquence conformément à leur réglage de mise au point, les images comprenant une première image avec un réglage de mise au point le plus haut et une seconde image avec un réglage de mise au point le plus bas, les première et seconde images ayant uniquement un voisin le plus proche, l'ensemble des autres images des au moins deux images ayant deux voisins les plus proches,
   soit le calcul d'une valeur de la moyenne arithmétique de la valeur absolue de la différence de facteur de mérite entre tous les voisins les plus proches, la valeur étant une constante de normalisation, soit le calcul d'une valeur de la valeur quadratique moyenne de la différence de facteur de mérite entre tous les voisins les plus proches, la valeur étant une constante de normalisation (104),
   le calcul d'un facteur de mérite normalisé pour chacune des images par division du facteur de mérite de chaque image par la constante de normalisation (106),
   la sélection du réglage de mise au point à l'aide du facteur de mérite normalisé pour chacune des images et d'un critère de sélection prédéterminé (108).

2. Procédé selon la revendication 1, dans lequel au moins trois images sont acquises.

3. Procédé selon l'une quelconque des revendications précédentes, dans lequel entre 4 et 40 images sont acquises, en particulier 5 à 20 images sont acquises.

4. Procédé selon l'une quelconque des revendications précédentes, dans lequel l'appareil d'acquisition d'image numérique a une plage de mise au point, les au moins deux images étant acquises sur l'entière plage de mise au point.

5. Produit programme d'ordinateur comprenant des instructions exécutables par machine pour réaliser un procédé selon l'une quelconque des revendications précédentes.

6. Appareil d'acquisition d'image numérique comprenant :

   un élément d'acquisition d'image (220, 222, 224, 226, 228, 230, 232) pour acquérir au moins deux images, les images étant acquises avec différents réglages de mise au point, correspondant à une mesure de la position d'une lentille de mise au point (222),
   un élément de calcul de facteur de mérite (234) pour calculer un facteur de mérite pour chacune des images,
   un élément de calcul de constante de normalisation (236) pour soit calculer une valeur de la moyenne arithmétique de la valeur absolue de la différence (662) de facteur de mérite entre des images avec des réglages de mise au point adjacents lorsque les au moins deux images ont été ordonnées conformément à leurs réglages de mise au point, la valeur étant une constante de normalisation, soit calculer une valeur de la valeur quadratique moyenne de la différence (764) de facteur de mérite entre des images avec des réglages de mise au point adjacents lorsque les au moins deux images ont été ordonnées conformément à leurs réglages de mise au point, la valeur étant une constante de normalisation,
   un élément de normalisation de facteur de mérite (238) pour calculer un facteur de mérite normalisé pour chacune des images par division du facteur de mérite de chaque image par la constante de normalisation,
   un élément de sélection de réglage de mise au point (240) pour sélectionner le réglage de mise au point à l'aide du facteur de mérite normalisé pour chacune des images et d'un critère de sélection prédéterminé.

**7.** Appareil d'acquisition d'image numérique selon la revendication 6, dans lequel l'élément d'acquisition d'image est apte à acquérir au moins trois images.

**8.** Appareil d'acquisition d'image numérique selon la revendication 6, dans lequel l'élément d'acquisition d'image est apte à acquérir entre 4 et 40 images, en particulier est apte à acquérir entre 5 et 20 images.

**9.** Appareil d'acquisition d'image numérique selon l'une quelconque des revendications 6 à 8, dans lequel l'appareil d'acquisition numérique a une plage de mise au point, l'élément d'acquisition d'image étant apte à acquérir les au moins deux images sur l'entière plage de mise au point.

# Fig. 1

| | |
|---|---|
| acquire at least two images with different focus settings | 100 |
| calculate a figure of merit for each image | 102 |
| calculate a normalization constant using the figure of merit calculated for each of the images | 104 |
| calculate a normalized figure of merit for each of the images by dividing the figure of merit of each image by the normalization constant | 106 |
| select the focus setting using the normalized figure of merit for each of the images and a predetermined selection criterion | 108 |

# Fig. 2

# Fig. 3

Focus Figure of Merit

Focus Position

350

# Fig. 4

# Fig. 5

# Fig. 6

# Fig. 7

# Fig. 8

```
┌─────────────────────────────────────────┐
│   acquire at least two images with       │ ─── 100
│   different focus settings               │
└─────────────────────────────────────────┘
                    │
                    ▼
┌─────────────────────────────────────────┐
│   calculate a figure of merit for each image  │ ─── 102
└─────────────────────────────────────────┘
                    │
                    ▼
┌─────────────────────────────────────────┐
│   calculate a noise estimate using the   │ ─── 110
│   figure of merit calculated for each of the images  │
└─────────────────────────────────────────┘
                    │
                    ▼
┌─────────────────────────────────────────┐
│   determine at least one threshold       │ ─── 112
│   value using the noise estimate         │
└─────────────────────────────────────────┘
                    │
                    ▼
┌─────────────────────────────────────────┐
│   select the focus setting using the figure of merit  │ ─── 114
│   for each image, the at least one threshold value,  │
│   and a predetermined selection criterion │
└─────────────────────────────────────────┘
```

# Fig. 9

# Fig. 10

# Fig. 11

# Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6512549 B1
- US 20080181595 A1